# FASCICULE DE BREVET EUROPEEN

(11) **EP 3 051 150 B1**
(45) Date de publication et mention de la délivrance du brevet: **04.01.2023**
(21) Numéro de dépôt: 16152491.3
(22) Date de dépôt: 22.01.2016
(51) Int. Cl.: F15B 15/28

(54) **CAPTEUR DE PROXIMITÉ POUR AÉRONEF DOTÉ D'UN FUSIBLE HYDRAULIQUE**
NÄHERUNGSSENSOR FÜR LUFTFAHRZEUG, DER MIT EINER HYDRAULISCHEN SICHERUNG AUSGESTATTET IST
PROXIMITY SENSOR FOR AIRCRAFT PROVIDED WITH A HYDRAULIC FUSE

(30) Priorité: 02.02.2015 FR 1550800
(43) Date de publication de la demande: 03.08.2016
(73) Titulaire: Safran Landing Systems, 78140 Vélizy-Villacoublay (FR)
(72) Inventeur: ATAMAN, Gary, Whitby, Ontario L1P 1L5 (CA)
(74) Mandataire: Lavialle, Bruno François Stéphane

(56) Documents cités:
- CA-A1- 2 576 801
- FR-A5- 2 121 951
- GB-A- 2 122 726
- JP-U- H0 558 910
- JP-U- H01 143 404
- US-A- 4 679 452

## Description

L'invention concerne un capteur et en particulier un système comportant un vérin et un capteur permettant de détecter une position d'un piston du vérin.

### ARRIERE PLAN DE L'INVENTION

Plus particulièrement, l'invention concerne un capteur comportant :
- un boîtier délimitant un volume interne au boîtier ;
- une pièce mobile située à l'intérieur dudit volume interne du boîtier ;
- des moyens de détection d'un déplacement de ladite pièce mobile par rapport au boîtier ;
- des moyens d'actionnement passant au travers d'une première ouverture du boîtier et agencés pour commander le déplacement de ladite pièce mobile située à l'intérieur dudit volume interne depuis une première zone externe au boîtier ;
- des premiers moyens d'étanchéité agencés par rapport au boîtier et aux moyens d'actionnement pour s'opposer au passage de fluide provenant de la première zone externe au boîtier vers ledit volume interne du boîtier, via ladite première ouverture du boîtier.

Un tel capteur peut présenter des disfonctionnements lorsque son volume interne est soumis à de fortes variations de pression notamment du fait d'une fuite des premiers moyens d'étanchéité du capteur.

Les documents JP H01 143404U, CA 2576801 A1 et US 4679452A divulguent des capteurs déjà connus.

### OBJET DE L'INVENTION

L'invention a pour objet l'obtention d'un capteur capable de limiter le risque de disfonctionnement du fait d'une rupture d'étanchéité au niveau des premiers moyens d'étanchéité.

### RESUME DE L'INVENTION

En vue de réaliser cet objet, il est essentiellement proposé selon l'invention, un capteur du type prédéfini et essentiellement caractérisé en ce que :
- le boîtier comporte en outre une seconde ouverture s'étendant entre ledit volume interne du boîtier et une seconde zone externe au boîtier; et
- des seconds moyens d'étanchéité agencés pour s'opposer au passage de fluide, via ladite seconde ouverture, certains au moins de ces seconds moyens d'étanchéité étant adaptés à rompre pour permettre un passage de fluide, entre le volume interne et la seconde zone externe au boitier, dès lors que la pression interne au niveau du volume interne dépasse la pression externe au niveau de la seconde zone externe, d'un premier différentiel de pression prédéterminé.

Ainsi, en cas de rupture d'étanchéité au niveau des premiers moyens d'étanchéité, la pression à l'intérieur du volume interne du boitier se met à varier en fonction de la pression qui règne au niveau de la première zone externe au boitier. Si le différentiel de pression entre le volume interne et la seconde zone externe dépasse le premier différentiel de pression prédéterminé, alors certains au moins des seconds moyens d'étanchéité rompent, pour autoriser le passage de fluide entre le volume interne et la seconde zone externe. Ceci permet de réduire le différentiel de pression existant entre le volume interne et la seconde zone externe pour ainsi limiter le risque d'endommager le boitier et en particulier les moyens de détection du déplacement de ladite pièce mobile par rapport au boîtier.

Les seconds moyens d'étanchéité agissent comme un fusible hydraulique permettant de limiter par une rupture mécanique définitive, de certains au moins des seconds moyens d'étanchéité, les écarts de pression entre l'intérieur et l'extérieur du volume interne au boitier.

On note que le premier différentiel de pression est une valeur comprise entre 150 kPa et 3 000 kPa et préférentiellement entre 150kPa et 500 kPa, cette valeur étant la différence entre la pression régnant dans le volume interne moins la pression régnant au niveau de la seconde zone extérieure au boitier.

Dans un mode particulier de réalisation du capteur selon l'invention, ces moyens de détection comportent des composants électroniques qui sont situés dans un espace protégé du boîtier, à l'écart dudit volume interne, le capteur comportant en outre des troisièmes moyens d'étanchéité agencés pour s'opposer au passage de fluide entre le volume interne et l'espace protégé, les seconds moyens d'étanchéité et les troisièmes moyens d'étanchéité sont agencés pour qu'en cas d'augmentation de la pression à l'intérieur du volume interne, les seconds moyens d'étanchéité se rompent systématiquement avant que l'on ait une rupture de l'étanchéité des troisièmes moyens d'étanchéité.

En d'autres termes en cas d'augmentation de la pression à l'intérieur du volume interne, les seconds moyens d'étanchéité se rompent systématiquement pour permettre d'abaisser la pression dans le volume interne et ainsi préserver l'intégrité des troisièmes moyens d'étanchéité qui protègent les composants électroniques placés dans l'espace protégé. Ces composants électroniques peuvent comprendre un transistor et/ou un amplificateur et/ou une inductance qui peuvent être détériorés en cas d'immersion dans un fluide hydraulique.

Dans un mode de réalisation particulier de l'invention, les second moyens d'étanchéité comportent un bouchon assemblé dans la seconde ouverture du volume interne, ce bouchon présentant une face orientée vers le volume interne et une face orientée vers la seconde zone externe et un alésage s'étendant entre ces deux faces du bouchon, cet alésage étant rempli d'un matériau d'étanchéité disposé de manière à être expulsé de l'alésage dès lors qu'il est soumis à un différentiel de pression au moins égal audit premier différentiel de pression prédéterminé.

Dans ce mode, la rupture d'étanchéité entre le volume interne et la seconde zone externe se fait par expulsion du matériau d'étanchéité hors de l'alésage dès que le premier différentiel de pression entre le volume interne et la seconde zone externe est atteint. Le fait que la fonction de rupture d'étanchéité soit réalisée à l'aide d'un bouchon distinct du boitier permet de localiser la fonction fusible dans une pièce échangeable sans avoir à remplacer le boitier. Il est plus facile de s'assurer du respect de la fonction fusible à une pression différentiel donnée lorsque l'on utilise un bouchon plutôt qu'un boitier complet. On note que la valeur du premier différentiel de pression est choisie en fonction du type de bouchon implanté sur le boitier.

Dans un mode de réalisation complémentaire du précédent, on peut faire en sorte que le matériau d'étanchéité soit disposé dans l'alésage de manière que sa présence dans l'alésage puisse être constatée par inspection visuelle depuis l'extérieur du capteur.

Avec ce mode de réalisation, on peut aisément détecter la rupture des seconds moyens d'étanchéité pour ainsi connaitre un état des premiers moyens d'étanchéité.

Il est alors possible d'intervenir pour réparer / remplacer les premiers moyens d'étanchéité et remplacer le bouchon par un nouveau bouchon d'étanchéité présentant le matériau d'étanchéité dans l'alésage.

L'invention porte aussi sur un système comportant un capteur conforme à l'un quelconque des modes de réalisation du capteur de l'invention.

Ce système selon l'invention comporte en outre un vérin hydraulique comportant un piston et une chambre hydraulique dans laquelle coulisse ce piston, ladite première zone externe au boitier et une portion des moyens d'actionnement étant situés à l'intérieur de la chambre hydraulique du vérin de manière qu'un déplacement du piston dans la chambre hydraulique puisse commander le déplacement des moyens d'actionnement et entrainer le déplacement de la pièce mobile dans le volume interne du boitier du capteur.

En cas de défaillance des premiers moyens d'étanchéité placés entre la première zone externe qui se trouve dans la chambre hydraulique du vérin et le volume interne du boitier, du fluide hydraulique sous pression peut s'introduire dans le volume interne du boitier.

Grâce au capteur selon l'invention, le volume interne du boitier est protégé contre un risque de surpression dans ce volume interne du boitier. Ainsi, si la pression interne au boitier augmente trop par rapport à la pression régnant dans la seconde zone externe au boitier, alors le premier différentiel de pression prédéterminé est atteint et l'on a une rupture de certains au moins des seconds moyens d'étanchéité. Du fluide hydraulique peut s'écouler hors du volume interne du boitier via sa seconde ouverture ce qui permet de limiter la pression dans le volume interne du boitier et ainsi limiter le risque d'endommagement des moyens de détection et/ou du boitier.

La fonction de détection réalisée par le capteur reste disponible même en cas de rupture de certains au moins des premiers moyens d'étanchéité. De même le vérin peut continuer à fonctionner même après l'occurrence de la fuite hydraulique via les premiers moyens d'étanchéité.

Pour ces raisons, le capteur selon l'invention est particulièrement adapté pour mesurer la position d'un piston d'un vérin hydraulique.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:
- la figure 1 est une vue en perspective d'un atterrisseur d'aéronef comportant un vérin hydraulique d'extension et rétraction de l'atterrisseur, ce vérin étant équipé d'un capteur selon l'invention ;
- la figure 2 est une vue en coupe longitudinale d'une portion du vérin hydraulique et du capteur illustrés à la figure 1, ce capteur permettant de détecter au moins une position de coulissement d'un piston à l'intérieur du vérin.

### DESCRIPTION DETAILLEE DE L'INVENTION

Comme indiqué précédemment, l'invention concerne un capteur 1 permettant de détecter une position de coulissement d'un piston 22 d'un vérin hydraulique 21.

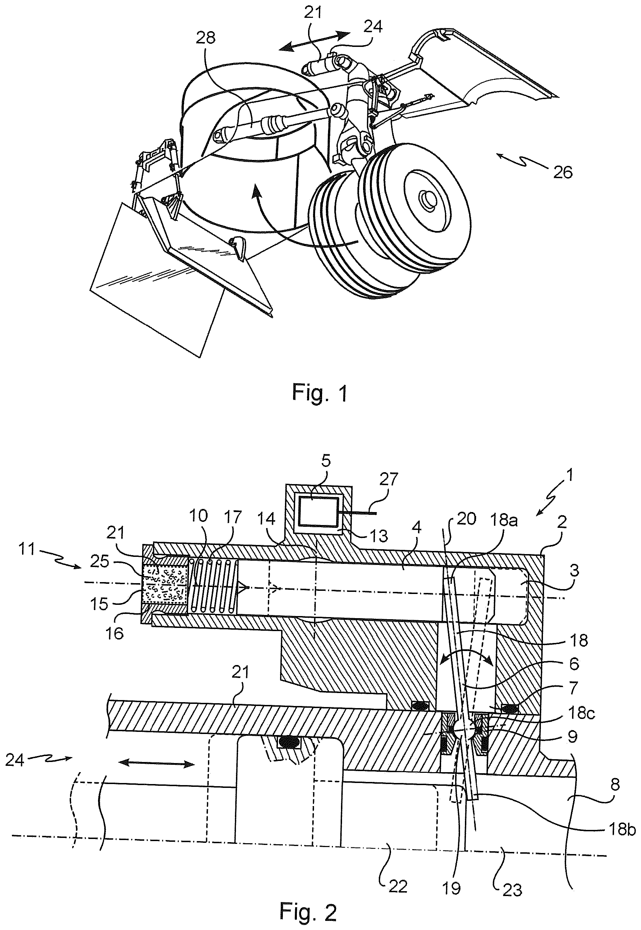

Plus particulièrement, l'invention concerne un système 24 tel qu'un atterrisseur d'aéronef 26 équipé d'un vérin hydraulique 21 pour l'extension et/ou la rétraction de l'atterrisseur d'aéronef 26 par rapport à la cellule de l'aéronef. Comme on le voit sur la coupe longitudinale de la figure 2, ce vérin 21 présente un piston 22 et une chambre hydraulique 23 dans laquelle coulisse ce piston 22.

Le capteur 1 est assemblé de manière étanche contre le corps du vérin 21 afin de détecter au moins une position de coulissement du piston 22 à l'intérieur du corps du vérin 21.

Ce capteur 1 selon l'invention comporte :
- un boîtier 2 délimitant un volume interne 3 au boîtier ;
- une pièce mobile 4, tel qu'un noyau métallique, située à l'intérieur dudit volume interne 3 du boîtier ;
- des moyens de détection 5 d'un déplacement de ladite pièce mobile 4 par rapport au boîtier 2 ;
- des moyens d'actionnement 6 passant au travers d'une première ouverture 7 du boîtier 2 et agencés pour commander le déplacement de ladite pièce mobile 4 depuis une première zone externe 8 au boîtier 2 ;
- des premiers moyens d'étanchéité 9 agencés par rapport au boîtier 2 et aux moyens d'actionnement 6 pour s'opposer au passage de fluide provenant de la première zone externe 8 au boîtier 2 vers ledit volume interne 3 du boîtier, via ladite première ouverture 7 du boîtier.

L'assemblage étanche entre le capteur et le corps du vérin comporte un joint d'interface entre le boitier du capteur et le corps du vérin, ce joint d'interface est annulaire autour de la première ouverture 7 du boitier 2.

L'assemblage entre le capteur et le vérin est réalisé :
- de manière que la première zone externe 8 au boitier 2 et une portion des moyens d'actionnement 6 sont situés à l'intérieur de la chambre hydraulique 23 du vérin 21 ; et
- de manière qu'un déplacement du piston 22 dans la chambre hydraulique puisse commander le déplacement des moyens d'actionnement 6 et entrainer le déplacement de la pièce mobile 4 dans le volume interne 3.

Les moyens d'actionnement 6 qui passent au travers de la première ouverture du boîtier comportent un levier 18 présentant des première et seconde parties 18a, 18b situées de part et d'autre d'une portion sphérique 18c du levier.

La première partie de levier 18a se trouve à l'intérieur du volume interne 3 et vient en appui contre la pièce mobile 4. La seconde partie 18b du levier 18 s'étend dans la première zone externe 8 et est agencée pour que le piston 22 puisse venir en contact contre cette seconde partie 18b au moins lorsque ce piston 22 arrive dans une position de fin de course à l'intérieur du vérin.

Le capteur 1 comporte un presse étoupe enserrant la portion sphérique 18c du levier afin de lui permettre de pivoter par rapport à ce presse étoupe selon au moins un axe de pivotement 19 perpendiculaire à un axe principal 20 du levier 18. On note que le levier est une pièce s'étendant longitudinalement le long de cet axe principal 20, le levier étant préférentiellement une pièce de révolution. Ce presse étoupe qui appartient aux premiers moyens d'étanchéité 9 réalise une étanchéité contre la portion sphérique 18c du levier 18, tout autour de cette portion sphérique 18c.

Le presse étoupe comporte :
- une bague externe en appui dans un alésage complémentaire formé dans le corps du vérin ou dans le boitier 2 ; et
- une bague interne insérée dans un alésage formé dans la bague externe.

La portion sphérique 18c est coincée entre ces bagues qui ont des diamètres intérieurs respectivement inférieurs au diamètre externe de la portion sphérique 18c.

Un joint torique interne frotte contre et autour de la portion sphérique 18c tout en étant maintenu axialement par coincement entre ces bagues interne et externe.

Un joint torique externe étanchéifie le pourtour de la bague externe par rapport à l'alésage qui la reçoit.

Les moyens de détection 5 comportent des composants électroniques situés dans un espace protégé 13 du boîtier qui est à l'écart du volume interne 3.

Pour se prémunir d'un risque de dégradation du boitier ou des composants électroniques en cas de rupture au moins partielle des premiers moyens d'étanchéité, il est proposé selon l'invention que :
- le boîtier 2 comporte une seconde ouverture 10 s'étendant entre ledit volume interne 3 du boîtier 2 et une seconde zone externe 11 au boîtier; et que
- des seconds moyens d'étanchéité 12 agencés pour s'opposer au passage de fluide, via ladite seconde ouverture 10, certains au moins de ces seconds moyens d'étanchéité 12 étant adaptés à rompre pour permettre un passage de fluide, entre le volume interne 3 et la seconde zone externe 11, dès lors que la pression interne au niveau du volume interne 3 dépasse la pression externe au niveau de la seconde zone externe 11, d'un premier différentiel de pression prédéterminé et non nul.

Typiquement, la seconde zone externe est distante de la première et se trouve disposée pour être soumise à une pression ambiante régnant à l'extérieur du capteur et à l'extérieur du vérin.

Les seconds moyens d'étanchéité sont dimensionnés pour que le premier différentiel de pression ait une valeur comprise entre 150 kPa et 3 000 kPa et préférentiellement comprise entre 150 kPa et 500 kPa, cette valeur correspondant à la différence entre une pression régnant à l'intérieur du volume interne et une pression régnant au niveau de la seconde zone externe au boitier.

On note que la valeur minimale de 150 kPa est choisie pour être supérieure au différentiel de pression existant entre une pression atmosphérique mesurée à 0m d'altitude et une pression atmosphérique mesurée à 12000 m d'altitude.

Ainsi, les seconds moyens d'étanchéité résistent aux variations de pression ambiante auxquelles est soumis l'aéronef lors de ses vols.

Par contre, en cas de rupture des premiers moyens d'étanchéité, si la pression entre le volume interne 3 et la seconde zone externe dépasse la valeur du premier différentiel de pression prédéterminé, alors certains au moins des seconds moyens d'étanchéité se rompent mécaniquement pour laisser passer du fluide. Ainsi, ces seconds moyens d'étanchéité servent de fusible hydraulique.

Cette rupture définitive permet de laisser une preuve de la défaillance des premiers moyens d'étanchéité pour faciliter la maintenance du capteur.

Pour réaliser cette la rupture programmée en fonction du premier différentiel de pression, les seconds moyens d'étanchéité comportent un bouchon 15 assemblé par filetage dans la seconde ouverture 10 du volume interne 3. Ce bouchon 15 présente une face orientée vers le volume interne 3 et une face orientée vers la seconde zone externe 11 et un alésage 16 s'étendant entre ses deux faces.

Cet alésage 16 est rempli d'un matériau d'étanchéité 25 disposé de manière à être expulsé de l'alésage 16 dès lors qu'il existe un différentiel de pression entre les faces égal ou supérieur audit premier différentiel de pression prédéterminé.

Ce matériau d'étanchéité peut être un métal ou un matériau polymère thermoplastique fondu dans l'alésage 16.

La résistance à l'éjection dépend de l'adhérence entre ce matériau d'étanchéité 25 et la surface interne de l'alésage 16, et en particulier de la section de ce matériau d'étanchéité.

Comme le bouchon est vissé, il peut être remplacé facilement lors d'une opération de maintenance. L'étanchéité entre la seconde ouverture 10 et le bouchon peut, par exemple, être obtenue par un joint périphérique du bouchon.

Comme la face externe du bouchon est visible depuis l'extérieur du capteur, la présence du matériau d'étanchéité 25 dans l'alésage peut être constatée visuellement. L'absence du matériau d'étanchéité dans l'alésage, est utile pour détecter, par simple inspection visuelle, un dysfonctionnement des premiers moyens d'étanchéité.

Il est aussi possible que ce matériau d'étanchéité soit relié via un lien souple au reste du bouchon afin d'éviter qu'il ne soit perdu lors de son éjection hors de l'alésage.

Un ressort de rappel 17 exerce sur la pièce mobile 4 qui coulisse à l'intérieur du volume interne 3, un effort élastique de rappel vers une première position. Cette première position correspond ici à la position occupée par cette pièce 4 lorsque le piston 22 est dans une position éloignée de sa fin de course. Ce ressort de rappel 17 est comprimé entre le bouchon 15 et la pièce mobile 4 contre lesquels il est en appui. Le ressort permet un retour élastique du levier 18 vers une position dans laquelle il se trouve lorsqu'il n'est pas en contact avec le piston 22.

On note que l'alésage 16 formé au travers du bouchon est cylindrique droit et présente un diamètre tel qu'il interdit le passage de la pièce mobile 4 qui est elle-même de forme cylindrique droite. Ceci évite le risque d'éjection de la pièce 4 par l'alésage 16. Le capteur peut ainsi continuer à fonctionner même si le matériau d'étanchéité 25 a été éjecté pour cause de rupture des premiers moyens d'étanchéité.

Le capteur 1 comporte aussi des troisièmes moyens d'étanchéité 14 agencés pour s'opposer au passage de fluide entre le volume interne 3 et l'espace protégé 13. Ainsi, l'espace protégé 13 permet d'éviter que les composants électroniques ne soient soumis aux variations de pression à l'intérieur du volume interne 3. Ces composants électroniques sont agencés pour détecter le déplacement de la pièce mobile 4 par rapport au boitier et pour transmettre un signal représentatif de ce déplacement vers une unité électronique distante du capteur. Ces composants électroniques peuvent constituer un capteur magnétique ou capacitif détectant la proximité de la pièce 4.

La transmission de signal peut se faire via un moyen filaire 27 relié aux composants électroniques et passant au travers du boitier de manière étanche. Ce moyen filaire 27 peut éventuellement comporter une connectique externe au boitier favorisant l'interchangeabilité du capteur.

Les seconds moyens d'étanchéité 12 et les troisièmes moyens d'étanchéité 14 sont agencés pour qu'en cas d'augmentation de la pression à l'intérieur du volume interne 3, les seconds moyens d'étanchéité 12 se rompent systématiquement avant que l'on ait une rupture de l'étanchéité des troisièmes moyens d'étanchéité 14.

Le système selon l'invention est placé pour détecter le moment où l'atterrisseur est sorti complètement et où la contrefiche 28 de l'atterrisseur doit être bloquée pour éviter le retour de l'atterrisseur vers une position rétractée.

L'invention n'est pas limitée aux exemples décrits précédemment et peut comporter d'autres modes de réalisation non décrits. En particulier, bien que les seconds moyens d'étanchéité soient réalisés à l'aide d'un matériau d'étanchéité 25 placé dans une l'alésage 16 de bouchon, l'invention peut aussi comprendre des équivalents fonctionnels tels qu'un opercule placé dans l'alésage du bouchon, cet opercule pouvant être en forme de plaque pouvant comporter une zone d'affaiblissement privilégiée de l'opercule (par exemple une prédécoupe partielle de l'opercule).

## Revendications

1. Capteur (1) comportant :
- un boîtier (2) délimitant un volume interne (3) au boîtier ;
- une pièce mobile (4) située à l'intérieur dudit volume interne (3) du boîtier ;
- des moyens de détection (5) d'un déplacement de ladite pièce mobile (4) par rapport au boîtier (2) ;
- des moyens d'actionnement (6) passant au travers d'une première ouverture (7) du boîtier (2) et agencés pour commander le déplacement de ladite pièce mobile (4) située à l'intérieur dudit volume interne (3) depuis une première zone externe (8) au boîtier (2) ;
- des premiers moyens d'étanchéité (9) agencés par rapport au boîtier (2) et aux moyens d'actionnement (6) pour s'opposer au passage de fluide provenant de la première zone externe (8) au boîtier (2) vers ledit volume interne (3) du boîtier, via ladite première ouverture (7) du boîtier, **caractérisé en ce que** :
- le boîtier (2) comporte en outre une seconde ouverture (10) s'étendant entre ledit volume interne (3) du boîtier (2) et une seconde zone externe (11) au boîtier ; et
- des seconds moyens d'étanchéité (12) agencés pour s'opposer au passage de fluide, via ladite seconde ouverture (10), certains au moins de ces seconds moyens d'étanchéité (12) étant adaptés à rompre pour permettre un passage de fluide, entre le volume interne (3) et la seconde zone externe (11), dès lors que la pression interne au niveau du volume interne (3) dépasse la pression externe au niveau de la seconde zone externe (11), d'un premier différentiel de pression prédéterminé.

2. Capteur selon la revendication 1, dans lequel le premier différentiel de pression est une valeur comprise entre 150 kPa et 3 000 kPa et préférentiellement comprise entre 150 kPa et 500 kPa, cette valeur correspondant à la différence entre une pression régnant à l'intérieur du volume interne et une pression régnant au niveau de la seconde zone externe au boitier.

3. Capteur selon l'une au moins des revendications 1 ou 2, dans lequel ces moyens de détection (5) comportent des composants électroniques qui sont situés dans un espace protégé (13) du boîtier, à l'écart dudit volume interne (3), le capteur (1) comportant en outre des troisièmes moyens d'étanchéité (14) agencés pour s'opposer au passage de fluide entre le volume interne (3) et l'espace protégé (13), les seconds moyens d'étanchéité (12) et les troisièmes moyens d'étanchéité (14) sont agencés pour qu'en cas d'augmentation de la pression à l'intérieur du volume interne (3), les seconds moyens d'étanchéité (12) se rompent systématiquement avant que l'on ait une rupture de l'étanchéité des troisièmes moyens d'étanchéité (14).

4. Capteur selon l'une quelconque des revendications précédentes, dans lequel les second moyens d'étanchéité comportent un bouchon (15) assemblé dans la seconde ouverture (10) du volume interne (3), ce bouchon (15) présentant une face orientée vers le volume interne (3) et une face orientée vers la seconde zone externe (11) et un alésage (16) s'étendant entre ces deux faces du bouchon (15), cet alésage (16) étant rempli d'un matériau d'étanchéité (25) disposé de manière à être expulsé de l'alésage (16) dès lors que le bouchon (15) est soumis à un différentiel de pression entre ses faces égal audit premier différentiel de pression prédéterminé.

5. Capteur selon la revendication 4, dans lequel le matériau d'étanchéité (25) est disposé dans l'alésage de manière que sa présence dans l'alésage puisse être constatée visuellement depuis l'extérieur du capteur (1).

6. Capteur selon l'une au moins des revendications 4 ou 5, dans lequel le bouchon (15) est assemblé au boitier (2) par un filetage.

7. Capteur selon l'une quelconque des revendications 4 à 6, dans lequel la pièce mobile (4) est coulissante à l'intérieur dudit volume interne (3) du boîtier et un ressort de rappel (17) exerce sur cette pièce mobile (4) un effort élastique de rappel vers une première position, ce ressort de rappel (17) étant comprimé entre le bouchon (15) et la pièce mobile (4) contre lesquels il est en appui.

8. Capteur selon l'une quelconque des revendications précédentes, dans lequel les moyens d'actionnement (6) passant au travers de la première ouverture du boîtier comportent un levier (18) présentant des première et seconde parties (18a, 18b) situées de part et d'autre d'une portion sphérique (18c) du levier, la première partie de levier (18a) se trouvant à l'intérieur du volume interne (3) et venant en appui contre la pièce mobile (4) et la seconde partie (18b) du levier s'étendant dans la première zone externe (8), le capteur (1) comportant en outre un presse étoupe enserrant la portion sphérique (18c) du levier afin de lui permettre de pivoter par rapport à ce presse étoupe selon au moins un axe de pivotement (19) perpendiculaire à un axe principal (20) du levier (18), ce presse étoupe appartenant audits premiers moyens d'étanchéité (9) et réalisant une étanchéité contre la portion sphérique (18c) du levier (18).

9. Système (24) comportant le capteur (1) selon l'une quelconque des revendications précédentes et comportant en outre un vérin hydraulique (21) comportant un piston (22) et une chambre hydraulique (23) dans laquelle coulisse ce piston (22), ladite première zone externe (8) au boitier (2) et une portion des moyens d'actionnement (6) étant situés à l'intérieur de la chambre hydraulique (23) du vérin (21) de manière qu'un déplacement du piston (22) dans la chambre hydraulique puisse commander le déplacement des moyens d'actionnement (6) et entrainer le déplacement de la pièce mobile (4) dans le volume interne (3) du boitier (2) du capteur (1).

10. Système (24) selon la revendication 9 , le capteur (1) étant selon la revendication 8 et dans lequel la seconde partie (18b) du levier (18) s'étendant dans la première zone externe (8) est agencée pour venir en contact contre le piston (22) du vérin hydraulique (21) au moins lorsque ce piston (22) est dans une position de fin de course.

11. Système selon l'une quelconque des revendications 9 ou 10, dans lequel le vérin (21) est un vérin hydraulique d'extension et/ou de rétraction d'un atterrisseur d'aéronef (26).

## Patentansprüche

1. Sensor (1), umfassend:
- ein Gehäuse (2), das ein Innenvolumen (3) innerhalb des Gehäuses begrenzt;
- ein bewegliches Teil (4), das sich im Inneren des genannten Innenvolumens (3) des Gehäuses befindet;
- Detektionsmittel (5) zum Erfassen einer Verschiebung des genannten beweglichen Teils (4) in Bezug auf das Gehäuse (2);
- Betätigungsmittel (6), die durch eine erste Öffnung (7) des Gehäuses (2) hindurchgehen und ausgebildet sind, die Verschiebung des genannten beweglichen Teils (4), das sich im Inneren des genannten Innenvolumens (3) befindet, von einem ersten Außenbereich (8) außerhalb des Gehäuses (2) zu steuern;
- erste Dichtungsmittel (9), die in Bezug auf das Gehäuse (2) und die Betätigungsmittel (6) angeordnet sind, sich dem Durchtritt des Fluids, das aus dem ersten Außenbereich (8) außerhalb des Gehäuses (2) stammt, zu dem genannten Innenvolumen (3) des Gehäuses über die genannte erste Öffnung (7) des Gehäuses zu widersetzen, **dadurch gekennzeichnet, dass**:
- das Gehäuse (2) ferner eine zweite Öffnung (10) umfasst, die sich zwischen dem genannten Innenvolumen (3) des Gehäuses (2) und einem zweiten Außenbereich (11) außerhalb des Gehäuses erstreckt; und
- zweite Dichtungsmittel (12), die ausgebildet sind, sich dem Durchtritt von Fluid über die genannte zweite Öffnung (10) zu widersetzen, wobei zumindest einige dieser zweiten Dichtungsmittel (12) geeignet sind, zu brechen, um einen Fluiddurchtritt zwischen dem Innenvolumen (3) und dem zweiten Außenbereich (11) zu gestatten, sobald der Innendruck im Bereich des Innenvolumens (3) den Außendruck im Bereich des zweiten Außenbereichs (11) um eine erste vorbestimmte Druckdifferenz übersteigt.

2. Sensor nach Anspruch 1, bei dem die erste Druckdifferenz ein Wert zwischen 150 kPa und 3000 kPa und vorzugsweise zwischen 150 kPa und 500 kPa ist, wobei dieser Wert der Differenz zwischen einem im Inneren des Innenvolumens herrschenden Druck und einem im Bereich des zweiten Außenbereichs außerhalb des Gehäuses herrschenden Druck entspricht.

3. Sensor nach mindestens einem der Ansprüche 1 oder 2, bei dem diese Detektionsmittel (5) elektronische Komponenten umfassen, die sich in einem geschützten Raum (13) des Gehäuses befinden, mit Abstand zu dem genannten Innenvolumen (3), wobei der Sensor (1) ferner dritte Dichtungsmittel (14) umfasst, die ausgebildet sind, sich dem Fluiddurchtritt zwischen dem Innenvolumen (3) und dem geschützten Raum (13) zu widersetzen, wobei die zweiten Dichtungsmittel (12) und die dritten Dichtungsmittel (14) derart ausgebildet sind, dass im Falle einer Erhöhung des Drucks im Inneren des Innenvolumens (3) die zweiten Dichtungsmittel (12) systematisch brechen, ehe es zu einem Bruch der Dichtheit der dritten Dichtungsmittel (14) kommt.

4. Sensor nach einem der vorhergehenden Ansprüche, bei dem die zweiten Dichtungsmittel einen Stopfen (15) umfassen, der in der zweiten Öffnung (10) des Innenvolumens (3) montiert ist, wobei dieser Stopfen (15) eine zum Innenvolumen (3) gerichtete Seite und eine zum zweiten Außenbereich (11) gerichtete Seite und eine Bohrung (16) aufweist, die sich zwischen diesen beiden Seiten des Stopfens (15) erstreckt, wobei diese Bohrung (16) mit einem Dichtungsmaterial (25) gefüllt ist, das derart angeordnet ist, dass es aus der Bohrung (16) ausgestoßen wird, sobald der Stopfen (15) einer Druckdifferenz zwischen seinen Seiten ausgesetzt ist, die gleich der genannten ersten vorbestimmten Druckdifferenz ist.

5. Sensor nach Anspruch 4, bei dem das Dichtungsmaterial (25) in der Bohrung derart angeordnet ist, dass sein Vorhandensein in der Bohrung von außerhalb des Sensors (1) visuell festgestellt werden kann.

6. Sensor nach mindestens einem der Ansprüche 4 oder 5, bei dem der Stopfen (15) durch ein Gewinde am Gehäuse (2) montiert ist.

7. Sensor nach einem der Ansprüche 4 bis 6, bei dem das bewegliche Teil (4) im Inneren des genannten Innenvolumens (3) des Gehäuses verschiebbar ist und eine Rückstellfeder (17) auf dieses bewegliche Teil (4) eine elastische Rückstellkraft in Richtung einer ersten Position ausübt, wobei diese Rückstellfeder (17) zwischen dem Stopfen (15) und dem beweglichen Teil (4), an denen sie anliegt, zusammengedrückt ist.

8. Sensor nach einem der vorhergehenden Ansprüche, bei dem die Betätigungsmittel (6), die durch die erste Öffnung des Gehäuses hindurchgehen, einen Hebel (18) umfassen, der ein erstes und ein zweites Teil (18a, 18b) aufweist, die sich zu beiden Seiten eines kugelförmigen Abschnitts (18c) des Hebels befinden, wobei sich der erste Hebelteil (18a) im Inneren des Innenvolumens (3) befindet und an dem beweglichen Teil (4) zur Anlage kommt, und sich der zweite Teil (18b) des Hebels in dem ersten Außenbereich (8) erstreckt, wobei der Sensor (1) ferner eine Stopfbuchse umfasst, die den kugelförmigen Abschnitt (18c) des Hebels eng umschließt, um ihm zu gestatten, in Bezug auf diese Stopfbuchse um mindestens eine Schwenkachse (19) zu schwenken, die senkrecht zu einer Hauptachse (20) des Hebels (18) ist, wobei diese Stopfbuchse zu den genannten ersten Dichtungsmitteln (9) gehört und eine Abdichtung gegen den kugelförmigen Abschnitt (18c) des Hebels (18) herstellt.

9. System (24), umfassend den Sensor (1) nach einem der vorhergehenden Ansprüche und ferner umfassend einen Hydraulikzylinder (21), der einen Kolben (22) und eine Hydraulikkammer (23) umfasst, in der dieser Kolben (22) gleitet, wobei sich der genannte erste Außenbereich (8) außerhalb des Gehäuses (2) und ein Abschnitt der Betätigungsmittel (6) im Inneren der Hydraulikkammer (23) des Zylinders (21) befinden, sodass eine Verschiebung des Kolbens (22) in der Hydraulikkammer die Verschiebung der Betätigungsmittel (6) steuern und die Verschiebung des beweglichen Teils (4) in dem Innenvolumen (3) des Gehäuses (2) des Sensors (1) verursachen kann.

10. System nach Anspruch 9, wobei der Sensor (1) nach Anspruch 8 ist, und bei dem der zweite Teil (18b) des Hebels (18), der sich in dem ersten Außenbereich (8) erstreckt, ausgebildet ist, an dem Kolben (22) des Hydraulikzylinders (21) in Kontakt zu kommen, zumindest wenn dieser Kolben (22) in einer Hubendposition ist.

11. System nach einem der Ansprüche 9 oder 10, bei dem der Zylinder (21) ein hydraulischer Zylinder zum Ausfahren und/oder Einfahren eines Luftfahrzeugfahrwerks (26) ist.

## Claims

1. A sensor (1) comprising:
• a housing (2) defining an internal volume (3) that is internal to the housing;
• a movable part (4) situated inside said internal volume (3) of the housing;
• detector means (5) for detecting a movement of said movable part (4) relative to the housing (2);
• transfer means (6) passing through a first opening (7) in the housing (2) and arranged to act from a first external zone (8) external to the housing (2) to cause said movable part (4) situated inside said internal volume (3) to move; and
• first sealing means (9) arranged relative to the housing (2) and to the transfer means (6) to oppose fluid passing from the first external zone (8) external to the housing (2) towards said internal volume (3) of the housing via said first opening (7) of the housing, the sensor being **characterized in that**:
• the housing (2) further includes a second opening (10) extending between said internal volume (3) of the housing (2) and a second external zone (11) external to the housing; and
• second sealing means (12) arranged to oppose fluid passing via said second opening (10), at least some of the second sealing means (12) being adapted to break to allow fluid to pass, between the internal volume (3) and the second external zone (11), as soon as the internal pressure in the internal volume (3) exceeds the external pressure in the second external zone (11) by a first predetermined pressure difference.

2. Sensor according to claim 1, wherein the first pressure difference is a value lying in the range 150 kPa to 25 000 kPa, preferably 150 kPa to 3000 kPa and preferably lying in the range 150 kPa to 500 kPa, this value corresponding to the pressure difference between a pressure existing inside the internal volume and a pressure existing in the second external zone external to the housing.

3. Sensor according to claim 1 or claim 2, wherein the detector means (5) include electronic components that are situated in a protected space (13) of the housing that is spaced apart from said internal volume (3), the sensor (1) further including third sealing means (14) arranged to oppose fluid passing between the internal volume (3) and the protected space (13), the second sealing means (12) and the third sealing means (14) being arranged so that in the event of the pressure inside the internal volume (3) increasing, the second sealing means (12) always break before the sealing of the first sealing means (1) is broken.

4. Sensor according to any preceding claim, wherein the second sealing means include a plug (15) assembled in the second opening (10) of the internal volume (3), the plug (15) having one face facing towards the internal volume (3) and another face facing towards the second external zone (11), and a bore (16) extending between these two faces of the plug (15), the bore (16) being filled with a sealing material (25) arranged so as to be expelled from the bore (16) when the plug (15) is subjected to a pressure difference between its faces that is equal to said first predetermined pressure difference.

5. Sensor according to claim 4, wherein the sealing material (25) is arranged in the bore so that its presence in the bore can be observed visually from outside the sensor (1).

6. Sensor according to claim 4 or claim 5, wherein the plug (15) is assembled to the housing (2) by a thread.

7. Sensor according to any one of claims 4 to 6, wherein the movable part (4) is slidable inside said internal volume (3) of the housing, and a return spring (17) exerts a resilient return force on the movable part (4) urging it towards a first position, the return spring (17) being compressed between the plug (15) and the movable part (4) against which it bears.

8. Sensor according to any preceding claim, wherein the transfer means (6) passing through the first opening of the housing comprise a lever (18) having first and second portions (18a, 18b) situated on either side of a spherical portion (18c) of the lever, the first lever portion (18a) being inside the internal volume (3) and bearing against the movable part (4), and the second portion (18b) of the lever extending in the first zone (8), the sensor (1) further including packing clamped against the spherical portion (18c) of the lever so as to enable it to pivot relative to the packing about at least one pivot axis (19) perpendicular to a main axis (20) of the lever (18), the packing forming part of said first sealing means (9) and providing sealing against the spherical portion (18c) of the lever (18).

9. A system (24) comprising the sensor (1) according to any preceding claim and further comprising a hydraulic actuator (21) having a piston (22) and a hydraulic chamber (23) in which the piston (22) slides, said first external zone (8) external to the housing (2) and a portion of the transfer means (6) being situated inside the hydraulic chamber (23) of the actuator (21) so that a movement of the piston (22) in the hydraulic chamber can cause the transfer means (6) to move and entrain movement of the movable part (4) in the internal volume (3) of the housing (2) of the sensor (1).

10. System (24) according to claim 9, the sensor (1) being according to claim 8, and wherein the second portion (18b) of the lever (18) extending in the first external zone (8) is arranged to come into contact against the piston (22) of the hydraulic actuator (21) at least when the piston (22) is in an end-of-stroke position.

11. System according to claim 9 or claim 10, wherein the actuator (21) is a hydraulic actuator for extending and/or retracting aircraft landing gear (26).
